(19) Europäisches Patentamt
European Patent Office
Office européen des brevets

(11) Veröffentlichungsnummer: **0 328 979 A2**

(12) **EUROPÄISCHE PATENTANMELDUNG**

(21) Anmeldenummer: **89102000.0**

(22) Anmeldetag: **06.02.89**

(51) Int. Cl.4: **C08F 230/04 , B01J 39/18**

(30) Priorität: **15.02.88 DE 3804646**

(43) Veröffentlichungstag der Anmeldung: **23.08.89 Patentblatt 89/34**

(84) Benannte Vertragsstaaten: **BE DE ES FR GB GR IT NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Kuchen, Wilhelm, Prof. Dr.**
**Am Strasserfeld 16**
**D-4000 Düsseldorf 12(DE)**
Erfinder: **Schram, Jürgen**
**Schneiderstrasse 64**
**D-4150 Krefeld(DE)**

(54) **Makroporöse ionenselektive Austauscherharze.**

(57) Die Erfindung betrifft makroporöse ionenselektive Austauscherharze, deren Herstellung und Verwendung.

In durch vernetzende Copolymerisation in Substanz erhaltenen, wohldefinierten polymerisierbaren Metallkomplexen, die polymerisierbare Liganden, und gegebenenfalls weitere, nicht-polymerisierbare Liganden sowie nicht-polymerisierbare Anionen enthalten, liegen die Metallionen in der gleichen metalltypischen Koordinationssphäre vor, wie in den Ausgangskomplexen. Durch Elution mit einem geeigneten Eluans bleiben in den makroporösen ionenselektiven Austauscherharzen Hohlräume zurück, die als Haftstellen Donatoratome in metallspezifischer Anordnung enthalten.

EP 0 328 979 A2

# Makroporöse ionenselektive Austauscherharze

Die vorliegende Erfindung betrifft makroporöse ionenselektive Austauscherharze, die durch vernetzende Polymerisation von wohldefinierten polymerisierbaren Metallkomplexen erhältlich sind, ein Verfahren zu ihrer Herstellung und die Verwendung von derartigen Austauscherharzen.

Es ist bekannt, daß Polymerisationen in Gegenwart von Metallionen zu einer gewissen Ionenselektivität hierbei erzeugter Ionenaustauscherharze führen können (H. Nishide und E. Tsuchida, Makromol. Chem. 177 (1976), 2295). Es wird angenommen und wahrscheinlich gemacht, daß hierbei "in situ" zunächst Metallkomplexe mit Monomeren oder Oligomeren entstehen, ohne daß diese jedoch als einheitlich und hinsichtlich ihrer Koordinationssphäre als wohldefiniert bezeichnet werden könnten.

Es ist weiterhin bekannt, daß ausgehend von Metallionen Polykondensate mit gewisser Ionenselektivität erhalten werden (H. Bernhard und F. Grass, Monatshefte der Chemie 98, (1967), 1050 und 1464).

Aus U. Braun und W. Kuchen, Chemikerzeitung, 108. Jahrgang (1984), Nr. 7/8, Seite 255, sind ionenselektive Austauscher harze bekannt, die auf folgendem Weg erhalten wurden: Polymerisierbare, wohldefinierte Metallkomplexe charakteristischer Koordinationsgeometrie wurden mit geeigneten Monomeren derart vernetzend copolymerisiert, daß nach Elution der Metallionen in der polymeren Matrix gleichsam "maßgeschneiderte" Hohlräume zurückbleiben, in die bei erneuter Beladung des Harzes bevorzugt die Ionenart des Ausgangskomplexes eingelagert wird.

Als Modellsubstanzen wurden vinylierte Dithiophosphinato-Komplexe von Übergangsmetallen eingesetzt. Diese Harze wiesen bezüglich ihres Ionenaustauschvermögens ein sehr unterschiedliches Verhalten auf.

Aus C. Tiby, Bundesministerium für Forschung und Technologie, Forschungsbericht T84/163, August 1984 aus Sci. Tech. Aerosp. Rep. 1985, 23 (3), ist bekannt, homogene organische Membranen mit verschiedenen Kupferkomplexen durch Kondensation herzustellen. Eine Polymerisation gelang jedoch nicht. Es wurden die Kupferionen-spezifischen Transporteigenschaften dieser Membranen untersucht. Die auf der Basis von 8-Hydroxychinolin-Kupferkomplexen ($N_2O_2$-Komplexe) hergestellten Membranen zeigen keine Kupferionen-spezifischen Transporteigenschaften. Die durchgeführten Experimente weisen lediglich darauf hin, daß die $Cu^{2+}$-Ionen durch die Liganden so stark gebunden sind, daß sie auch unter Anlegen eines elektrischen Feldes nicht aus dem Komplex herausgezogen werden können.

Bei den Membranen, die durch sauerstoffbindende Liganden gekennzeichnet sind (ionotrope Membran, Cu-Salicylaldehyd-Membran und Cu-Maleinsäureanhydrid-Membran), konnte gezeigt werden, daß das elektrische Feld als treibende Kraft dazu genutzt werden kann, $Cu^{2+}$-Ionen aus dem Komplex herauszuziehen und durch die Membran zu transportieren. Im Vergleich zu der unselektiven Nafion®-Kationenaustauschermembran konnte über einen Zeitraum von 30 h eine Bevorzugug des $Cu^{2+}$-Ionentransports gegenüber dem $Na^{+}$-Ionentransport von bis zu 38 % beobachtet werden. Die genannten Cu-Maleinsäureanhydrid-Komplexe werden jedoch nicht durch vernetzende Polymerisation von wohldefinierten Metallkomplexen, sondern durch Kondensation hergestellt.

Die Aufgabe der vorliegenden Erfindung bestand darin, makroporöse ionenselektive Austauscherharze zur Verfügung zu stellen, die durch vernetzende Polymerisation von wohldefinierten polymerisierbaren Metallkomplexen mit Vernetzern erhältich sind, wobei als Liganden vorzugsweise einfache, käuflich erhältliche Moleküle eingesetzt werden sollten. Weiterhin bestand die Aufgabe der vorliegenden Erfindung darin, ein Verfahren zur Herstellung der makroporösen ionenselektiven Austauscherharze zur Verfügung zu stellen, das eine praktische Anwendung derartiger Produkte für Ionenaustauschzwecke ermöglicht.

Die vorstehend genannte Aufgabe wird gelöst durch makroporöse ionenselektive Austauscherharze, erhältlich durch vernetzende Polymerisation von wohldefinierten polymerisierbaren Metallkomplexen, dadurch gekennzeichnet, daß man Metallkomplexe der allgemeinen Formel (I)

$M_aL_bB_cX_d$ (I)

mit monomeren und/oder oligomeren Vernetzern umsetzt, die wenigstens zwei polymerisierbare Kohlenstoff-Kohlenstoff-Mehrfachbindungen aufweisen, wobei für die allgemeine Formel (I) folgendes gilt:

M = Hauptgruppenmetall und/oder Nebengruppenmetall,
L = polymerisierbarer Ligand,
B = nicht-polymerisierbarer Ligand,
X = nicht-polymerisierbares Anion,
a = eine ganze Zahl im Bereich von 1 bis 6,
b = eine ganze Zahl im Bereich von 1 bis 8,
c = eine ganze Zahl im Bereich von 0 bis 4,
d = eine ganze Zahl im Bereich von 0 bis 6.

Im Sinne der Erfindung sind Metallkomplexe der allgemeinen Formel (I) bevorzugt, in denen die Indizes a bis d die folgenden Bedeutungen aufweisen.

a = eine ganze Zahl im Bereich von 1 bis 4,
b = eine ganze Zahl im Bereich von 1 bis 6,
c = eine ganze Zahl im Bereich von 0 bis 2,
d = eine ganze Zahl im Bereich von 0 bis 2.

Eine bevorzugte Ausführungsform der vorliegenden Erfindung betrifft Metallkomplexe der nachstehend angegebenen allgemeinen Formeln, in denen für M, L, B und X die oben angegebenen Definitionen gelten:
$ML_2$, $ML_3$, $M_2L_6$, $M_2L_4B_2$,
$M_4L_6B$, $ML_2X$, $ML_4X_2$, $ML_6X_2$.

Im einzelnen gilt für die Metallkomplexe der allgemeinen Formel (I) sowie für die vorstehend angegebenen bevorzugten Metallkomplexe das Folgende:

Als Zentralatom M in den Metallkomplexen können prinzipiell alle Hauptgruppenmetalle oder Nebengruppenmetalle Verwendung finden, sofern sie eine ausreichende Komplexstabilität aufweisen. Eine bevorzugte Ausführungsform der vorliegenden Erfindung betrifft solche Metallkomplexe, in denen das Hauptgruppenmetall oder Nebengruppenmetall M ausgewählt ist aus: Zink, Cadmium, Blei, Nickel, Cobalt, Kupfer, Silber sowie den übrigen Edelmetallen. Der Index a kennzeichnet die Anzahl der Metallatome pro Komplexeinheit.

Als polymerisierbare Liganden L kommen alle solche polymerisierbaren Verbindungen in Frage, die zur Komplexbildung mit dem Zentralatom M befähigt sind. Im Sinne der Erfindung können beispielsweise die folgenden polymerisierbaren Liganden L Verwendung finden:

Ungesättigte Carbonsäuren der allgemeinen Formel (II):

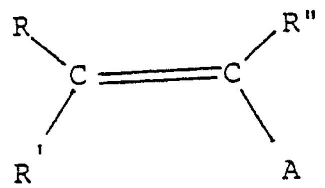

(II)

wobei
R für H, $CH_3$ oder $C_6H_5$,
R′ für H oder $CH_3$,
R″ für H oder $CH_3$ und
A für COOH, $CH_2COOH$ oder CO-NH-$CH_2COOH$
steht;
beispielsweise Acrylsäure, Methacrylsäure, Glycinato-N-methacrylsäure, Zimtsäure oder Crotonsäure. Vinylderivate, wie Vinylpyridin, Vinylimidazol oder Vinylacetylacetonat, und Styrolderivate, wie 4-Aminostyrol oder 4-Carbonsäurestyrol.

Derartige Komplexliganden weisen olefinische Doppelbindungen auf, die unter Einwirkung von beispielsweise aktinischer Strahlung oder der Einwirkung von Radikalstartern einer vernetzenden Polymerisation unterworfen werden können.

Eine bevorzugte Ausführungsform der vorliegenden Erfindung betrifft solche Metallkomplexe, in denen der polymerisierbare Ligand L ausgewählt ist aus der Gruppe: Acrylsäure, Methacrylsäure, N-Methacryloylglycin, 4-Vinylpyridin und 1-Vinylimidazol.

Generell gilt, daß die erfindungsgemäßen Metallkomplexe als polymerisierbare Liganden L sowohl eine der vorstehend genannten Verbindungstypen alleine als auch zwei oder mehrere derselben enthalten können. So kann beispielsweise als Ligand L neben Methacrylsäure ferner auch 4-Vinylpyridin vorliegen.

Der den Ligand L betreffende Index b ist abhängig von der Anzahl a der Metallatome pro Komplexeinheit, von der Koordinationszahl des Zentralatoms M sowie von der Anzahl c der im Komplex gegebenenfalls vorliegenden nicht-polymerisierbaren Liganden B.

Als nicht-polymerisierbare Liganden B kommen im Sinne der Erfindung solche Verbindungen oder auch Atome in Frage, die gleichfalls zur Komplexbildung mit dem Zentralatom M befähigt sind. Beispielhaft seien hierfür genannt: Wasser, Pyridin, Chinolin und Sauerstoff. Diese - in den Metallkomplexen gegebenenfalls vorliegenden - nicht-polymerisierbaren Liganden B dienen zur Absättigung gegebenenfalls noch offener Koordinationsstellen am Zentralatom M. Dies bedeutet, daß die Metall komplexe immer dann weitere Liganden B enthalten können, wenn nicht bereits alle Koordinationsstellen des oder der Zentralatoms(e) M

durch die polymierisierbaren Liganden L besetzt sind. Der die Liganden B betreffende Index c ist mithin gleichfalls abhängig von Index a und von der Koordinationszahl des Zentralatoms M sowie von der Anzahl b der im Komplex vorliegenden polymerisierbaren Liganden L.

Erfindungsgemäß bevorzugt als nicht-polymerisierbare Liganden B sind: Sauerstoff, Wasser und Pyridin.

Schließlich kommen erfindungsgemäß als nicht-polymerisierbare Anionen X die Säurereste üblicher anorganischer oder organischer Säuren in Frage. Beispielhaft und im Sinne der Erfindung bevorzugt seien als nicht-polymerisierbare Anionen X genannt: $NO_3^-$, $Cl^-$, $CH_3COO^-$ und $SO_4^{2-}$. Die Metallkomplexe bedürfen immer dann derartiger Anionen X, wenn dies zur Neutralisation des oder der Zentralatoms(e) erforderlich ist. Die Anzahl d dieser Anionen X pro Komplexeinheit ist damit abhängig vom Index a, von der Wertigkeit des Zentralatoms M und des jeweiligen Anions X sowie von der Anzahl b der Liganden L.

Nachstehend findet sich eine beispielhafte Zusammenstellung von erfindungsgemäßen polymerisierbaren Metallkomplexen.

| Typ | Beispiel |
|---|---|
| $ML_2$: | $ZnL_2$, $CdL_2$, $PbL_2$ mit L = Methacrylat,<br>$CuL_2$ mit L = N-Methacryloylglycin, |
| $ML_3$: | $AgLL'_2$ mit L = Methacrylat, L′ = Vinylpyridin, |
| $M_2L_6$: | $Cu_2L_4L'_2$, $Zn_2L_4L'_2$ mit L = Methacrylat, L′ = Vinylpyridin |
| $M_2L_4B_2$: | $Cu_2L_4(H_2O)_2$, $Cu_2L_4$ (Pyridin)$_2$ mit L = Methacrylat |
| $M_4L_6B$: | $Pb_4L_6O$, $Zn_4L_6O$ mit L = Methacrylat |
| $ML_2X$: | $[AgL_2]^+ NO_3^-$ mit L = Vinylpyridin |
| $ML_4X_2$: | $[NiL_4]^{++} (NO_3^-)_2$ mit L = Vinylimidazol |
| $ML_6X_2$: | $[CoL_6]^{++} (NO_3^-)_2$ mit L = Vinylimidazol |

Erfindungsgemäß wird zur Herstellung der Ionenaustauscherharze eine möglichst konzentrierte Lösung der als Matrix dienenden Komplexe in einem Gemisch von Vernetzer und geeignetem Inertmittel hergestellt, die dann nach Zugabe eines Radikalinitiators einer vernetzenden Polymerisation in Substanz unterworfen wird. Die erhaltenen Ionenaustauscherharze werden üblicherweise zur Erzielung der gewünschten Korngröße gemahlen. Behandelt man diese Ionenaustauscherharze mit einem geigneten Eluans, so werden die Metallionen und - falls vorhanden - auch die nicht polymerisierbaren Komplexliganden aus diesen entfernt, so daß in den Harzen Hohlräume zurückbleiben, die als Haftstellen Donatoratome in metallspezifischer Koordinationsgeometrie enthalten. Erwiesenermaßen wird in diesen Hohlräumen bevorzugt diejenige Metallionenart aufgenommen, die im Ausgangskomplex vorlag. Als Folge dieses Matrixeffekts resultieren also im Ionenaustauscherharz gleichsam "maßgeschneiderte" Leerstellen für die-jeweiligen Metallionen.

Hervorzuheben ist, daß diese Harze auch nach mehrmaliger Beladung und Regeneration keine Kapazitätsänderung und damit keine Tendenz zum "Ausbluten" zeigen.

Als Vernetzer im Sinne der vorliegenden Erfindung werden vorzugsweise Ethylenglykoldimethacrylat und/oder Divinylbenzol eingesetzt.

Vorzugsweise wird die vernetzende Polymerisation durch bekannte Radikalstarter ausgelöst, die insbesondere ausgewählt sind aus Diacylperoxiden, Cumolhydroperoxid, t-Butylperoxid und organischen Diazoverbindungen, wie Azo-isobuttersäurenitril.

Dem auf dem Gebiet der Polymerisation von Monomeren arbeitenden Durchschnittsfachmann ist die zu verwendende Konzentration an Radikalstarter bzw. die zu verwendende Wellenlänge und Intensität der Strahlung bekannt, die zur vernetzenden Polymerisation führt.

Erfindungsgemäße ionenselektive Austauscherharze weisen eine Makroporosität auf, damit der Zugang zu möglichst vielen austauschaktiven Zentren im Inneren der Harzpartikel gewährleistet ist.

Für die praktische Durchführung bietet sich die Technik der Suspensionspolymerisation an. Diese hat gegenüber der Polymerisation in Substanz den Vorteil, daß die Harzpartikel direkt in der von der Anwendungsseite gewünschten Perlform erhalten werden, und somit die mit dem Mahlen und Sieben aufgrund elektrostatischer Aufladung möglicherweise verbundenen Probleme entfallen.

Bei der Copolymerisation von polymerisierbaren Liganden L enthaltenden Metallkomplexen in Gegenwart eines polymerisationsinerten Verdünnungsmittels entstehen in Abhängigkeit von den Versuchsbedingungen Polymere mit homogenem, quellungsporösem oder permanent porösem Netzwerk. Die Bildung permanent poröser Netzwerke wird in bestimmten Grenzen durch einen zunehmenden Gehalt des Reaktionsgemisches an Vernetzer (beispielsweise Divinylmonomer) sowie durch steigende Mengen an Verdünnungsmittel (Inertstoff) begünstigt. Quellungsporöse Netzwerke unterscheiden sich von permanentporösen dadurch, daß ihre Poren beim Entquellen kollabieren. Ein permanentes, in sich verbundenes Porensystem gewährleistet den eingangs geforderten leichten Stofftransport in das Innere der Harzpartikel und läßt sich sehr leicht anhand der hohen inneren Oberfläche der getrockneten Polymeren nachweisen.

Als Inertmittel im Sinne der vorliegenden Erfindung werden insbesondere Agenzien wie Benzol, Toluol, Essigsäureester, Methanol oder Gemische derselben, vorzugsweise Benzol-Methanol-Gemische im Verhältnis von 1 : 1, verwendet, die unter den Polymerisationsbedingungen gemäß der vorliegenden Erfindung an schließend ohne Schwierigkeiten entfernt werden können, entweder durch Elution oder Trocknen der Harze im Vakuum bei erhöhter Temperatur. Bei der Verwendung von Methanol selbst als Inertmittel werden ebenso brauchbare Ionenaustauscherharze erhalten.

Die erfindungsgemäßen Ionenaustauscherharze können in Suspensionspolymerisation hergestellt werden. Hierbei wird das Polymerisat direkt in einer gebrauchsfertigen Form und Größenverteilung erhalten. Bei dem als Suspensions- oder Perlpolymerisation bezeichneten Verfahren wird das Monomer in einem mit dem Monomeren nicht mischbaren Suspensionsmedium durch Rühren zu Tröpfchen emulgiert und unter Zusatz eines im Monomeren löslichen Initiators polymerisiert. Durch Zugabe geeigneter Dispergatoren kann man ein Verschmelzen der Monomertröpfchen unterbinden, bis der Polymerisationsumsatz soweit fortgeschritten ist, daß für das entstandene Polymere die Gefahr der Koaleszenz nicht mehr besteht.

Die erzielbaren Teilchengrößen können beispielsweise im Bereich von 0,01 bis 5 mm Durchmesser durch folgende Parameter gesteuert werden:

1. Geometrische Faktoren:

Rührerform und Rührerdurchmesser im Verhältnis zu den Reaktorabmessungen, gegebenenfalls stromstörende Einbauten.

2. Betriebsgrößen:

Rührerdrehzahl, Phasenverhältnis, Füllhöhe, Temperatur.

3. Stoffdaten:

Viskositäten und Dichten der Monomerphase und der Inertmittelphase, Grenzflächenspannung und damit Art und Menge des Dispergators.

Als Dispergatoren dienen entweder im Supensionsmedium lösliche Makromoleküle (sogenannte "Schutzkolloide"), wie teilverseiftes Polyvinylacetat, Polyvinylalkohol oder Methylcellulose oder unlösliche anorganische Pulver (sogenante "Pickering-Emulgatoren"), wie feinverteiltes Bariumsulfat, Talkum oder Aluminiumhydroxid.

Gemäß einer bevorzugten Ausführungsform der vorliegenden Erfindung wird jedoch die Polymerisation in Substanz durchgeführt. Zur Herstellung der makroporösen ionenselektiven Austauscherharze wird eine möglichst konzentrierte Lösung der als Matrix dienenden Komplexe in einem Gemisch von Vernetzer und geeignetem Inertmittel hergestellt, die dann nach Zugabe eines Radikalstarters einer Polymerisation in Substanz unterworfen wird. Die entstandenen Harze werden zur Erzielung der gewünschten Korngröße gemahlen und zeigen nach dem Eluieren mit einem geeigneten Eluans eine deutliche Selektivität in Bezug auf die Ionenart des verwendeten Matrixkomplexes.

Die Polymerisation in Substanz einer Lösung, insbesondere einer möglichst konzentrierten Lösung des Matrixkomplexes, hat den Vorteil, daß eine äußerst homogene Verteilung der Komplexe in dem Polymerisat erreicht wird.

Es ist weiterhin Bestandteil der vorliegenden Erfindung, das Polymerisat vor der Behandlung mit dem Eluans auf die gewünschte Korngröße zu mahlen, da das eingeschlossene Metallion erst nach der Vermahlung des Harzes weitestgehend eluierbar ist, nicht jedoch aus dem primär anfallenden, relativ kompakten Material.

Wenn die gemahlenen makroporösen ionenselektiven Austauscherharze mit einem geeigneten Eluans, wie beispielsweise einer 1-Molaren Lösung von $NH_3/NH_4Cl$-Lösung, behandelt werden, werden die Metallionen und, falls vorhanden, auch die nichtpolymerisierbaren Komplexliganden (z.B. Pyridin- oder Sauerstoffionen) aus dem Polymerisat entfernt, so daß in den Harzen Hohlräume in einer metallspezifischen Anordnung zurückbleiben. Bei anschließender erneuter Beladung mit Metallsalzlösungen werden die eluierten Metalläquivalente wiederaufgenommen, wobei auch nach mehrfacher Wiederholung dieses Prozesses kein

"Ausbluten" der Harze beobachtet wurde.

Die erfindungsgemäßen makroporösen ionenselektiven Austauscherharze können überall dort eingesetzt werden, wo ein gegenüber dem Stand der Technik erhöhter Trennfaktor erwünscht ist. Die makroporösen ionenselektiven Austauscherharze der vorliegenden Erfindung sind beispielsweise zur Abwasserreinigung, zur Anreicherung von Spurenmetallen bei metallurgischen Aufbereitungsverfarhen oder bei Recycling-Prozessen, wie der Platinenherstellung bei der Rückgewinnung von $Cu^{2+}$ aus Ätzlösungen, verwendbar. Aufgrund der außerordentlich hohen Trennfaktoren und der Wiederaufarbeitbarkeit der Austauscherharze sind diese insbesondere zur Entfernung von Schwermetallspuren aus wäßrigen Abfall-Lösungen verwendbar.

In einigen Fällen, z.B. bei der Verwendung der Komplexe $Cu_2L_4B_2$ bzw. $Cu_2L_4L'_2$ als Matrixkomplexe liegen die durch den Matrixeffekt bedingten relativen Trennfaktoren $\alpha'$ der Ionenaustauscherharze bei den Systemen $Cu^{2+}/M^{2+}$ (M = Zn, Cd und Pb) im Bereich von 20 bis 250, und damit in einer Größenordnung, wie sie bisher bei Template-geprägten Ionenaustauscherharzen nicht zu beobachten war.

Dabei wird der relative Trennfaktor $\alpha'$ wie folgt definiert:

$$\alpha' = \frac{\alpha}{\alpha_0}$$

Hierbei bedeutet

$\alpha$ den Trennfaktor des erfindungsgemäßen matrixgeprägten Harzes und

$\alpha_0$ den Trennfaktor bei einem Harz gleichen Haftgruppengehaltes, das analog hergestellt wurde, jedoch ohne charakteristische Koordinationsgeometrie der Matrix.

## Herstellungsbeispiele

Die Darstellung der Matrixkomplexe, von denen einige in der Patenliteratur erwähnt sind (z.B. ihre Verwendung als Copolymer in Kunststoffen mit speziellen Eigenschaften), für die aber nicht in allen Fällen explizite Vorschriften, oder aber charakteristische Daten angegeben sind, wird folgendermaßen durchgeführt:

### MATRIXKOMPLEXE:

#### Beispiele 1 bis 6

#### Darstellung der Methacrylat-Matrixkomplexe

10 g des Metalloxids bzw. basischen Kupfercarbonats wurden in einem Lösungsmittel unter Eiskühlung langsam mit einer Lösung von Methacrylsäure in dem gleichen Lösungsmittel (2 : 1) versetzt. Man rührte die Mischung unter den angegebenen Bedingungen von Temperatur und Zeit, arbeitete die Reaktionsmischung wie in Tabelle 1 angegeben auf und kristallisierte den Komplex aus der Lösung nach Kühlung auf -20 °C.

#### Beispiele 7 und 8

#### Darstellung der Pyridin- bzw. 4-Vinylpyridinaddukte des Kupfer(II)methacrylats

10,0 g $Cu_2L_4 \cdot 2\,H_2O$ wurden in 200 ml Methanol mit 4,0 g Pyridin, bzw. 5,2 g 4-Vinylpyridin versetzt.

Das bei -20 °C auskristallisierende Rohprodukt wurde aus Benzol umkristallisiert.

Beispiel 9

Darstellung des Cu(II)-Komplexes von N-Methacryloylglycin

5,0 g N-Methacryloylglycin wurden in 20 ml heißem Methanol gelöst, mit 1,96 g KOH in 10 ml Methanol und 4,4 g in möglichst wenig heißem Wasser gelöstem $CuSO_4 . 5 H_2O$ versetzt. Nach Abfiltrieren des entstandenen $K_2SO_4$ wurde das Filtrat am Rotationsverdampfer eingeengt, mit wenig Diethylether versetzt und bei -20 °C zur Kristallisation gebracht. Zur Reinigung kristallisierte man aus Methanol-Diethylether um.

Tabelle 1

| Darstellung der Metallmethacrylate | | | | | | | | | |
|---|---|---|---|---|---|---|---|---|---|
| Bsp. | Substanz | Ausgangsverb. | Lsg¯n | | Methacrylsäure | Reaktionsbedingungen | | Aufarbeitung | Umkrist. aus : |
| | | | [ml] | Lsgm. | [g] | T [°C] | l [h] | | |
| 1 | $ZnL_2$ | ZnO | 100 | MeOH | 21,2 | 25 | 3 | - filtrieren, auf 50 ml einengen; | Methanol |
| 2 | $CdL_2$ | CdO | 200 | MeOH | 13,4 | 25 | 48 | - filtrieren, einengen, Rückstand in 100ml Aceton lösen, mit 100ml Ligroin (30-50°) versetzen; | Aceton/Ligroin |
| 3 | $PbL_2$ | PbO | 50 | MeOH | 7,7 | 25 | 3 | - kurz zum Sieden erhitzen, filtrieren; | Methanol |
| 4 | $Zn_4CL_6$ | ZnO | 250 | $CH_2Cl_2$ | 15,0 | 0 | 0,25 | - filtrieren, nach Zugabe von 300 ml Ligroin (50-60°) auf ein Volumen von 150 ml einengen; | Benzol |
| 5 | $Pb_4OL_6$ | PbO | 100 | $CH_2Cl_2$ | 5,8 | 0 | 0,5 | - zum Sieden erhitzen, filtrieren, auf 50 ml einengen | Benzol |
| 6 | $Cu_2L_1 \bullet 2\ H_2O$ | $Cu(OH)_2 \bullet CuCO_3$ | 50 | MeOH | 16,0 | 25 | 24 | - 150 ml MeOH zugeben, filtrieren; | Methanol |

| | | | | | | | | | |
|---|---|---|---|---|---|---|---|---|---|
| | | | | | | sodann zum Rückfluß erwärmen | 5 | | |
| L = Methacrylat | | | | | | | | | |

Tabelle 2

| Charakterisierung der Matrixkomplexe : | | | | | | | | | | | |
|---|---|---|---|---|---|---|---|---|---|---|---|
| Bsp. | Substanz | Fp. | Molmasse | | ¹H-NMR | IR[3] | | | MS | UV | µ (25 °C) |
| | | [°C] | ber. | exp. | [ppm] | νC=C [cm⁻¹] | νC=O [cm⁻¹] | νC=O [cm⁻¹] | | [cm⁻¹] | [B.M.] |
| 1 | $ZnL_2$ | 206 | 235,5 | 244[1] | 6,18 ; 5,60 ; 2,08[1] | 1655 | 1525 | 1425 | $Zn_4OL_6$ + | 51200 ($H_2O$) | -- |
| 2 | $CdL_2$ | 183 | 291,6 | 290[1] | 6,08 ; 5,52 ; 2,10[1] | 1640 | 1555 | 1415 | M + | 51050 ($H_2O$) | -- |
| 3 | $PbL_2$ | 246 | 377,4 | 377[1] | 6,17 ; 5,48 ; 2,07[1] | 1640 | 1500 | 1405 | M + | 498000 ($H_2O$) | -- |
| 4 | $Zn_4CL_6$ | 197 | 788 | 775[2] | 6,23 ; 5,53 ; 2,07[2] | 1640 | 1575 | 1425 | M + | -- | -- |
| 5 | $Pb_4CL_6$ | 183 | 1355,3 | 1375[2] | 5,93 ; 5,40 ; 1,83[2] | 1645 | 1530 | 1385 | -- | -- | -- |
| 6 | $Cu_2L_4 \bullet 2H_2O$ | 197 | 503,4 | -- | --- | 1640 | 1575 | 1415 | M + | 13850 ; 27450 (Remiss.) | 1,35 |
| 7 | $Cu_2L_4 \bullet 2Py$ | 175 | 625,6 | 614[3] | --- | 1645 | 1600 | 1415 | M + | 13200 ; 26050 (Remiss.) | 1,39 |
| 8 | $Cu_2L_4$ 2VPy | 186 | 677,7 | 669[3] | --- | 1645 | 1600 | 1415 | -- | 13400 ; 25900 (Remiss.) | 1,45 |
| 9 | $CuL'_2$ | 200 | 347,8 | -- | --- | 1640 | 1610 | 1390 | -- | 13300 ; 30650 (Remiss.) | 1,48 |

L = Methacrylat - Anion ; Py = Pyridin
L′ = N - Methacryloylgycin - Anion; VPy = Vinylpyridin
Die bei der Elementaranlyse gefundenen Werte stimmen in allen Fällen mit den berechneten ausgezeichnet überein.

1) In Methanol
2) In Chloroform
3) In Benzol
4) In KBr

Allgemeine Vorschrift für die Polymerisation

Der Matrixkomplex wurde, in dem Inertmittel gelöst, mit Vernetzer und Starter versetzt. In Ampullen (Vol. ca. 120 ml, ⌀ 30 mm) wurde die Reaktionsmischung unter Stickstoff dann während 8 h bei 60 °C im Wasserbad und anschließend weitere 3 d im Trockenschrank bei der gleichen Temperatur belassen. Das entstandene Polymer wurde anschließend gemahlen.

Die Harzausbeute war praktisch quantitativ. Alle Harze wiesen spezifische Oberflächen von ca. 400 $m^2$/

g auf. Ihre Austauschkapazität, bezogen auf die einpolymerisierten Metallionen, betrug ca. 40 bis 60 %.

Beispiel 10

Unter Verwendung von 3,0 mmol Matrixkomplex nach Beispiel 6, 20 g Methanol, 20 g Benzol, 40 g Ethylenglykoldimethacrylat und 0,2 g Azo-isobutyronitril wurde nach der allgemeinen Vorschrift ein makroporöses ionenselektives Austauscherharz hergestellt.

Beispiel 11

Unter Verwendung von 3,0 mmol des Matrixkomplexes gemäß Beispiel 8, 40 g Benzol, 40 g Ethylenglykoldimethacrylat und 0,2 g Azo-isobutyronitril wurde nach der allgemeinen Vorschrift ein makroporöses ionenselektives Austauscherharz hergestellt.

Beispiel 12

Unter Verwendung von 10 mmol des Matrixkomplexes gemäß Beispiel 3, 20 g Methanol, 20 g Benzol, 40 g Ethylenglykoldimethacrylat und 0,2 g Azo-isobutyronitril wurde ein makroporöses ionenselektives Austauscherharz hergestellt.

Beispiel 13

Unter Verwendung von 10 mmol des Matrixkomplex gemäß Beispiel 1, 20 g Methanol, 20 g Benzol, 40 g Ethylenglykoldimethyacrylat und 0,2 g Azo-isobutyronitril wurde ein makroporöses ionenselektives Austauscherharz hergestellt.

Beispiel 14

Unter Verwendung von 2,5 mmol des Matrixkomplexes gemäß Beispiel 4, 40 g Benzol, 40 g Divinylbenzol und 0,2 g Azo-isobutyronitril wurde ein makroporöses ionenselektives Austauscherharz hergestellt.

Beispiel 15

Unter Verwendung von 4,5 mmol des Matrixkomplexes gemäß Beispiel 9, 20 g Methanol, 20 g Benzol, 40 g Ethylenglykoldimethacrylat und 0,2 g Azo-isobutyronitril wurde ein makroporöses ionenselektives Austauscherharz hergestellt.

Bestimmung der maximalen Arbeitskapazität ("Batch-Verfahren")

Zur Quellung wurden 10,0 g des getrockneten Harzes während 1 h in Methanol suspendiert und dann in eine Chromatographiesäule (Innendurchmesser = 1,4 cm) übergeführt. Nach Elution der Säule, zunächst mit 250 ml Methanol, sodann mit 250 ml Wasser, wurden die Metallionen mit 200 ml einer Lösung, die jeweils 1 molar an $NH_3$, $NH_4Cl$ und 0,3-molar an KNa-Tartrat war, eluiert. Die Säule wurde anschließend mit Wasser bis zur Neutralität gewaschen, wobei die ersten 150 ml des Waschwassers mit dem Eluat vereinigt wurden. Der Metallgehalt der so erhaltenen Lösung wurde dann komplexometrisch (0,1 m EDTA [Ethylendiamin-N,N,N′,N′-tetraessigsäure]) bestimmt.

Das nunmehr in der $NH_4^+$-Form vorliegende Harz wurde in einen 500 ml Erlenmeyerkolben übergeführt und nach Zusatz von 20 ml einer 0,1 m Metallsalzlösung, sowie gegebenenfalls eines Puffers, mit soviel Wasser versetzt, daß das Gesamtvolumen 500 ml betrug. Anschließend wurde der Kolbeninhalt 2 h geschüttelt ("Batch-Verfahren") und das Harz sodann wieder in die Chromatographiesäule gefüllt. Nach

Waschen mit ca. 100 ml Wasser wurde mit einer Lösung von $NH_3/NH_4Cl$/KNa-Tartrat (Konzentration wie oben eluiert und im Eluat die Metallionenkonzentration inversvoltametrisch ermittelt.

Bei mehrfachem Wiederholen dieser Beladungs-/Elutionsexperimente lag die Streuung der Einzelwerte bei ca. 3 %, wobei in einigen Fällen eine deutliche Abhängigkeit der Austauschkapazität von der Art der angebotenen Metallionen festgestellt wurde.

## Bestimmung der Trennfaktoren $\alpha$ und $\alpha'$

Zu 10,0 g des getrockneten geprägten Harzes ($NH_4^+$-Form) wurden äquimolare Mengen zweier Metallsalzlösungen, deren Kationen der Tabelle 3 zu entnehmen sind (jeweils 10 ml einer 0,1 molaren Lösung), und gegebenenfalls ein geeigneter Puffer gegeben und die Mischung durch Zugabe von Wasser auf ein Gesamtvolumen von 500 ml gebracht. Anschließend wurde der Kolbeninhalt während 2 h geschüttelt, nach erfolgter Sedimentation in einer Probe der überstehenden Lösung die Konzentration der nicht aufgenommenen Metallionen pulspolarographisch bestimmt. Das Harz (Sediment) wurde in eine Säule übergeführt und wie vorstehend beschrieben eluiert. Im Eluat wurden die Konzentrationen der aufgenommenen Metallionen ermittelt. Aus den so erhaltenen Konzentrationen wurden die $\alpha$-Werte und aus ihnen sowie den entsprechenden $\alpha_0$-Werten $\alpha'$ berechnet.

Dabei gilt für den Trennfaktor $\alpha$ eines auf ein Metall $M_1$ erfindungsgemäß geprägten Harzes gegenüber einem Metall $M_2$:

$$\alpha = \frac{C_{M1\ Harz} / C_{M1\ Lösung}}{C_{M2\ Harz} / C_{M2\ Lösung}}$$

wobei C = µmol Metall/g Harz bzw. Lösung bedeutet. Die Werte für $\alpha_0$ ergeben sich in analoger Weise bei Verwendung eines nicht-geprägten Harzes, das in gleicher Weise wie das erfindungsgemäße geprägte Harz, jedoch ohne charakteristische Koordinationsgeometrie der Matrix, d.h. ohne den Zusatz des prägenden Metalls, hergestellt worden war.

Ferner gilt, wie schon vorstehend beschrieben:

$\alpha' = \alpha/\alpha_0$.

Die nachfolgende Tabelle 3 gibt die gefundenen relativen Trennfaktoren $\alpha'$ wieder, die unter Anwendung obiger Verfahren beim jeweils angegebenen pH-Wert ermittelt wurden.

Tabelle 3

| | pH | | relativer Trennfaktor α' | |
|---|---|---|---|---|
| Beispiel 10 | 4,6 | Cu/Zn | Cu/Cd | Cu/Pb |
| | | 16 | 50 | 70 |
| Beispiel 11 | 4,6 | Cu/Zn | Cu/Cd | Cu/Pb |
| | | 3,1 | 65 | 220 |
| Beispiel 12 | 5,5 | Pb/Zn | Pb/Cd | Pb/Cu |
| | | 6,8 | 2,8 | 3,1 |
| Beispiel 13 | 5,5 | Zn/Cd | Zn/Pb | Zn/Cu |
| | | 1,4 | 1,3 | 1,6 |
| Beispiel 14 | 5,5 | Zn/Cd | Zn/Pb | Zn/Cu |
| | | 2,7 | 1,6 | 1,6 |
| Beispiel 15 | 4,6 | Cu/Zn | | |
| | | 1,8 | | |

Die unter Verwendung der Matrixkomplexe entsprechend den Beispielen 10 bis 15 hergestellten makroporösen ionenselektiven Austauscherharze zeigen jeweils eine deutliche ionenselektive Austauschkapazität.

Beispiel 16

Untersucht wurde ein erfindungsgemäßes Harz, geprägt mit dem Komplex Silber-methacrylat-(4-vinylpyridin)$_2$ ($AgLL'_2$) im System Ag/Zn und im System Ag/Pb. Zum Vergleich wurde ein entsprechendes "Blindharz" ($LL'_2$), das die gleiche Anzahl und Art der Haftgruppen wie das geprägte Harz - rein statistisch im Copolymer verteilt - enthält, in die Untersuchung einbezogen.

Zusammensetzung der Harze:

Geprägtes Harz: 40 g (202 mmol) Ethylenglykoldimethacrylat (EGDMA) + 10 mmol des oben genannten Komplexes $AgLL'_2$
Blindharz: 40 g (202 mmol) Ethylenglykoldimethacrylat (EGDMA) + 10 mmol Ammoniummethacrylat + 20 mmol 4-Vinylpyridin.
Inertmittel für beide Harze: Benzol/Methanol-Gemisch im Verhältnis 1 : 1.

Ergebnis der Mischbeladung Ag/Zn:

10 g Harz - jeweils geprägtes Harz und Blindharz - wurden 2 h mit 500 ml einer Lösung geschüttelt, die je 1 mmol Silber(I)-und Zink(II)-nitrat (je 2 µmol Metall pro g Lösung) enthielt:

| Geprägtes Harz: | | | | | |
|---|---|---|---|---|---|
| | Ag | | Zn | | |
| pH | c Harz µmol/g | c Lösung µmol/g | c Harz µmol/g | c Lösung µmol/g | α |
| 4,7<br>5,7 | 40,9<br>64,4 | 1,21<br>0,73 | 1,63<br>8,04 | 2,01<br>1,88 | 42<br>20,5 |

| Blindharz: | | | | | |
|---|---|---|---|---|---|
| | Ag | | Zn | | |
| pH | c Harz µmol/g | c Lösung µmol/g | c Harz µmol/g | c Lösung µmol/g | $\alpha_0$ |
| 4,7<br>5,7 | 4,07<br>30,8 | 1,96<br>1,41 | 0,12<br>8,08 | 2,04<br>1,88 | 34,5<br>5,1 |

Hieraus resultieren die relativen Trennfaktoren $\alpha'$

| pH | $\alpha'$ |
|---|---|
| 4,7<br>5,7 | 1,2<br>4,0 |

Ergebnis der Mischbeladung Ag/Pb:

10 g Harz - jeweils geprägtes Harz und Blindharz - wurden 2 h mit 500 ml einer Lösung geschüttelt, die je 1 mmol Silber(I)-und Blei(II)-nitrat (je 2 µmol Metall pro g Lösung) enthielt.

| Geprägtes Harz: | | | | | |
|---|---|---|---|---|---|
| | Ag | | Pb | | |
| pH | c Harz µmol/g | c Lösung µmol/g | c Harz µmol/g | c Lösung µmol/g | α |
| 4,7<br>5,7 | 39,4<br>62,3 | 1,24<br>0,77 | 0,77<br>9,56 | 2,03<br>1,85 | 83,7<br>15,6 |

| Blindharz: | | | | | |
|---|---|---|---|---|---|
| | Ag | | Pb | | |
| pH | c Harz µmol/g | c Lösung µmol/g | c Harz µmol/g | c Lösung µmol/g | $\alpha_0$ |
| 4,7<br>5,7 | 5,27<br>25,4 | 1,93<br>1,52 | 1,81<br>17,2 | 2,00<br>1,69 | 3<br>1,6 |

Hieraus resultieren die relativen Trennfaktoren $\alpha'$

| pH | $\alpha'$ |
|---|---|
| 4,7 | 27,9 |
| 5,7 | 9,8 |

Das geprägte Harz zeigt bei beiden pH-Werten einen Prägeeffekt, wobei hier der weitaus deutlichste Trenneffekt im System Ag/Pb bei pH 4,7 liegt. Jedoch ist die Kapazität des Harzes in diesem Bereich geringer als bei pH 5,7.

| Kapazitäten der Harze in g Metall pro kg Harz: | | | | | | | | |
|---|---|---|---|---|---|---|---|---|
| | pH 4,7 | | pH 5,7 | | pH 4,7 | | pH 5,7 | |
| | Ag | Zn | Ag | Zn | Ag | Pb | Ag | Pb |
| geprägtes Harz: | 4,4 | 0,11 | 6,9 | 0,53 | 4,3 | 0,16 | 6,7 | 2,0 |
| Blindharz: | 0,44 | 0,008 | 3,3 | 0,53 | 0,56 | 0,37 | 2,7 | 3,6 |

## Ansprüche

1. Makroporöse ionenselektive Austauscherharze, erhältlich durch vernetzende Polymerisation von wohldefinierten polymerisierbaren Metallkomplexen, dadurch gekennzeichnet, daß man Metallkomplexe der allgemeinen Formel (I)

$M_aL_bB_cX_d$ (I)

mit monomeren und/oder oligomeren Vernetzern umsetzt, die wenigstens zwei polymerisierbare Kohlenstoff-Kohlenstoff-Mehrfachbindungen aufweisen, wobei für die allgemeine Formel (I) folgendes gilt:

M = Hauptgruppenmetall und/oder Nebengruppenmetall;
L = polymerisierbarer Ligand;
B = ein nicht-polymerisierbarer Ligand;
X = ein nicht-polymerisierbares Anion;
a = eine ganze Zahl im Bereich von 1 bis 6,
b = eine ganze Zahl im Bereich von 1 bis 8,
c = eine ganze Zahl im Bereich von 0 bis 4,
d = eine ganze Zahl im Bereich von 0 bis 6.

2. Makroporöse ionenselektive Austauscherharze nach Anspruch 1, dadurch gekennzeichnet, daß die polymerisierbaren Metallkomplexe die allgemeinen Formeln $ML_2$, $ML_3$, $M_2L_6$, $M_2L_4B_2$, $M_4L_6B$, $ML_2X$, $ML_4X_2$ oder $ML_6X_2$ aufweisen.

3. Makroporöse ionenselektive Austauscherharze nach Anspruch 1 oder 2, dadurch gekennzeichnet, daß das Haupt- oder Nebengruppenmetall M ausgewählt ist aus Zink, Cadmium, Blei, Nickel, Cobalt, Kupfer, Silber oder den übrigen Edelmetallen.

4. Makroporöse ionenselektive Austauscherharze nach Anspruch 1 oder 2, dadurch gekennzeichnet, daß der polymerisierbare Ligand L ausgewählt ist aus ungesättigen Carbonsäuren der allgemeinen Formel (II)

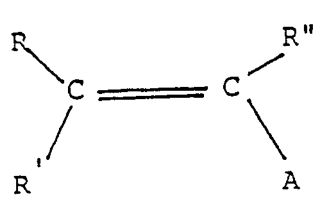

(II)

wobei
R für H, $CH_3$ oder $C_6H_5$;
$R'$ für H oder $CH_3$;

R″ für H oder $CH_3$ und
A für COOH, $CH_2COOH$ oder CO-NH-$CH_2COOH$
steht;
Vinylderivaten und/oder Styrolderivaten.

5. Makroporöse ionenselektive Austauscherharze nach Anspruch 4, dadurch gekennzeichnet, daß der polymerisierbare Ligand L ausgewählt ist aus Acrylsäure, Methacrylsäure, N-Methacryloylglycin, 4-Vinylpyridin oder 1-Vinylimidazol.

6. Makroporöse ionenselektive Austauscherharze nach Anspruch 1 oder 2, dadurch gekennzeichnet, daß der nicht-polymerisierbare Ligand B ausgwählt ist aus Sauerstoff, Wasser oder Pyridin.

7. Makroporöse ionenselektive Austauscherharze nach Anspruch 1 oder 2, dadurch gekennzeichnet, daß das nicht-polymerisierbare Anion X ausgewählt ist aus Nitrat, Chlorid, Acetat oder Sulfat.

8. Makroporöse ionenselektive Austauscherharze nach Ansprüchen 1 bis 7, dadurch gekennzeichnet, daß die Vernetzer ausgewählt sind aus Ethylenglykoldimethacrylat und/oder Divinylbenzol.

9. Makroporöse ionenselektive Austauscherharze nach Ansprüchen 1 bis 8, dadurch gekennzeichnet, daß die vernetzende Polymerisation durch Radikalstarter ausgelöst wird, die insbesondere ausgewählt sind aus Diacylperoxiden, Cumolhydroperoxid, t-Butylperoxid und organischen Diazoverbindungen.

10. Makroporöse ionenselektive Austauscherharze nach Ansprüchen 1 bis 9, dadurch gekennzeichnet, daß die Makroporosität durch Zugabe von Inertmitteln zu der vernetzenden Polymerisation eingestellt wird.

11. Makroporöse ionenselektive Austauscherharze nach Anspruch 10, dadurch gekennzeichnet, daß die Inertmittel ausgewählt sind aus Benzol und/oder Methanol, vorzugsweise aus Benzol-Methanolgemischen im Verhältnis von 1 : 1.

12. Verfahren zur Herstellung von makroporösen ionenselektiven Austauscherharzen nach Ansprüchen 1 bis 11, dadurch gekennzeichnet, daß man eine Lösung oder Suspension des Metallkomplexes in einem Gemisch des Vernetzers und des Inertmittels herstellt und nach Zugabe eines Radikalstarters vernetzend polymerisiert.

13. Verfahren nach Anspruch 12, dadurch gekennzeichnet, daß man das Polymerisat auf die gewünschte Korngröße mahlt und anschließend mit einem Eluans zur Entfernung des Inertmittels, sowie der Metallionen und - falls vorhanden - auch der nicht polymerisierbaren Komplexliganden behandelt.

14. Verwendung der makroporösen ionenselektiven Austauscherharze nach Ansprüchen 1 bis 11 zur Abwasserreinigung, Anreicherung von Spurenmetallen bei metallurgischen Aufbereitungsverfahren oder bei Recyclingprozessen.